# EUROPEAN PATENT APPLICATION

(11) **EP 2 515 237 A1**
(43) Date of publication of application: **24.10.2012**
(21) Application number: 11305459.7
(22) Date of filing: 18.04.2011
(51) Int. Cl.: G06F 12/02

(54) **Portable secure device providing storage service**

(71) Applicant: Gemalto SA, 92190 Meudon (FR)
(72) Inventor: Garnier, Thierry, 13420 Gemenos (FR)

(57) **Abstract**

The invention is a secure device comprising a non volatile memory and a means able to provide a secure storage to a contactless reader. The means is able to manage logical sectors comprising a preset number of 16-byte data blocks and to provide a secured access to these data blocks. The means is a software agent. The secure device comprises a microprocessor able to run said means. The means is adapted to ensure consistency of the data blocks and to ensure a preset number of writing into the data blocks without erasing operations.

## Description

### (Field of the invention)

The present invention relates to portable secure devices which provide storage service to another coupled device. It relates particularly to devices that meet the constraints of high processing speed and that ensure the integrity of the managed data.

### (Background of the invention)

The NFC (Near Field Communication) technology is based on the exchanging of data via a magnetic field. A NFC reader has an antenna which is able to modulate the electromagnetic field and to provide energy to NFC devices. The NFC reader is usually named a PCD (Proximity Coupling Device). The NFC device may be a PICC (Proximity Integrated Circuit Card or Proximity Card) or may embed components which act as logical PICC. The PICC and the PCD communicate thanks to an inductive coupling in a field frequency equal to 13.56 MHz. In particular, the ISO14443 and ISO18092 standards provide modulation technologies and communication protocols which may be used in NFC domain.

The existing contactless devices which provide storage features are based on Application-specific integrated circuits (ASIC) for performance reasons. These hardware elements are specifically designed and they ensure both very good response time and integrity of data which is managed. To date, it is known that good performances cannot be achieved by software design. Moreover, when designing a system, it is necessary to make choices and to emphasize either performance time or completeness of integrity coverage. Each choice comes at the expense of one of two criteria.

There is a need for providing an alternative to existing hardware solutions for secure devices.

### (Summary of the Invention)

An object of the invention is to solve the above mentioned technical problem.

The object of the present invention is a secure device comprising a non volatile memory and a means able to provide a secure storage to a contactless reader. The means is being able to manage logical sectors comprising a preset number of 16-byte data blocks. The means is able to provide a secured access to said data blocks. The means is a software agent. The secure device comprises a microprocessor able to run said means. The means is adapted to ensure consistency and integrity of the data blocks. The means is adapted to ensure storing and managing data blocks without erasing operations.

Advantageously, the means may be adapted to update a data block at the maximum speed allowed by the physical memory capabilities.

Advantageously, the memory may contain a plurality of physical pages, each page may contain a series of physical blocks and a series of cells, each of said physical blocks may be individually associated to a cell according to the cell rank, an active page may be allocated to a targeted logical sector and the means may be adapted:
- to allocate a physical block to a data block each time the data block is accessed for an update operation, the physical block being allocated only if said physical block is in memory virgin state and its associated cell contains a preset value,
- when reading a targeted data block, to identify the physical block allocated to the targeted data block by using the rank of the cell associated to the physical block, and if no physical block is allocated to the targeted data block, to simulate a virgin data block,
- to allocate a new active page to the targeted logical sector each time a data block belonging to the targeted logical sector is accessed for an update operation and the active page contains no free physical block, said active page becoming an obsolete page.

Advantageously, each page may be managed according a current state among the three states: Active, Ready-to-use (or Free), or Obsolete. In this case, the Active state corresponds to a page allocated to a logical sector, the Obsolete state corresponds to pages to erase and the Ready-to-use (Free) state corresponds to a page ready to be allocated. The means may be adapted to read the current state of a page at a preset position [i.e. a relative address] in the page itself.

Advantageously, the means may manage the targeted logical sector thanks to first administration data and may manage the data blocks of the targeted logical sector thanks to second administration data. Said first and second administration data may be recorded in the active page which is allocated to the targeted logical sector. Said first administration data may comprise the current state of the active page.

Advantageously, said second administration data may be stored in a subset of the series of cells of the active page. Each of said cells may have 2 bytes : first byte contains a data block number and the second one the state of the data block: a memory virgin state means this block is active, on contrary when written with a preset value, this byte indicates this data block is an obsolete one.

Advantageously, the byte containing the data block number may be split in two nibbles: one contains the data block number itself, the second one the 1-complement of said data block number.

Advantageously, the means may update the data blocks and the second administration data via non volatile memory programming cycle only.

Advantageously, the secure device may comprise a working memory and the means may be adapted to generate a first list in the working memory. Said first list may contain a mapping data reflecting the link between the targeted logical sector and the active page which is allocated to the targeted logical sector.

Advantageously, the means may be capable of generating a second list in the working memory, said second list containing references to pages having a Ready-to-use state (free pages).

Advantageously, the means may be capable of generating a third list in the working memory, the third list containing references to pages having an Obsolete state.

Advantageously, the means may be capable of triggering the erasing of a page having an Obsolete state when there is no execution of a critical processing, a processing being critical if the duration of execution of the processing must be lower than a preset threshold.

The process of granting logical sector access (i.e. authentication) may be a critical processing.

Advantageously, the secure device may be intended to connect a host device able to provide the secure device with power. The means may be capable of triggering the erasing only if the host device provides power to the secure device.

Advantageously, only pages having an obsolete state may be erased by the means.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts an example of architecture of a contactless portable device according to the invention.
- Figure 2 is depicts a system comprising a host device connected to a device according to the invention;
- Figure 3 is a first example of architecture of an active page managed in a portable device according to the invention;
- Figure 4 depicts an example of administration data related to the data blocks management in a device according to the invention;
- Figure 5 depicts an example of administration data related to the sector management in a device according to the invention;
- Figure 6 depicts a second example of architecture of an active page managed in a portable device according to the invention;
- Figure 7 depicts a second example of administration data related to the data blocks management in a device according to the invention;
- Figure 8 depicts a third example of administration data related to the data blocks management in a device according to the invention;
- Figure 9 depicts a second example of administration data related to the sector management in a device according to the invention; and
- Figure 10 depicts a fourth example of administration data related to the data blocks management in a device according to the invention.

### (Detailed description of the preferred embodiments)

The invention applies to any kinds of devices comprising a non volatile memory and a microprocessor.

The invention applies to both contact devices and contactless devices. The contactless devices are intended to communicate with contactless readers. The contact devices are be intended to connect a large number of host device types like mobile phones, Electronic Funds Transfer Terminals for payment, Personal Digital Assistants (PDA), Tablets, Personal Computers, or Machine-To-Machine (M2M) modules. These contact devices may also be intended to communicate with contactless readers through contactless means embedded in a connected host device.

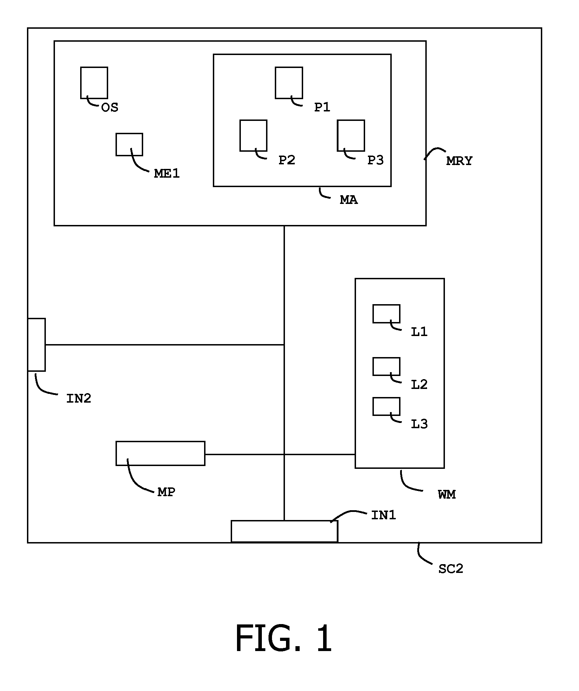

**Figure 1** shows an example of architecture of a contactless portable device SC2 according to a first embodiment of the invention.

In the present example, the contactless portable device SC2 is a Universal Integrated Circuit Card (UICC) having NFC features. Alternatively, the contactless device may be a SIM card, a USIM card or any personal security token. For instance, the device may be a smart card.

The contactless device SC2 contains a microprocessor MP, two communication interfaces IN1 and IN2, a non volatile memory MRY, and a working memory WM. The communication interface IN1 is able to connect a host device and allows exchanging data with the connected host device. The interface IN1 may be either a contact or contactless interface. The interface IN1 allows the contactless device SC2 to get power from the connected host device. The communication interface IN2 is able to communicate with a contactless reader. For example, the interface IN2 is contactless interface compliant with NFC. The interface IN2 allows the contactless device SC2 to get power from a contactless reader through the electro-magnetic field emitted by the reader.

The memory MRY may be an EEPROM or Flash memory. The memory MRY contains an operating system OS, a means ME1 and a storage area MA. The storage area MA contains a plurality of memory pages P1 to P3. For example, the storage area MA may contain 52 memory pages of 256 bytes. The size of the storage area MA may be sized so that the number of available memory pages is smaller or larger than 52. In particular, the size of the storage area MA can be set so that the number of available memory pages corresponds to a predetermined goal. Thus the number of writing operations which may be performed without physical erasing can be set to reach a preset target.

The means ME1 is a software component able to manage the storage area MA. The means ME1 is able to provide access to a plurality of logical sectors to a contactless reader. The means ME1 is able to individually allocate each memory page to a logical sector.

Each page may have one of the three following states: Active, Ready-to-use or Obsolete. A page having an Active state (also named "active page") is a page currently allocated to a logical sector. A page having a Ready-to-use state (also named "free page") is a page containing memory cell at a virgin value. The virgin value depends on the memory MRY type. In the present example, the virgin value is 0xFF. A free page is ready to be allocated to a logical sector. A page having an obsolete state (also named "obsolete page") is a page which must be erased and prepared so that the page become a ready-to-use (free) page.

The working memory WM is a RAM and comprises three lists L1, L2 and L3. The list L1 contains mapping data reflecting the allocation of active pages to their corresponding logical sectors. The list L2 contains references to pages having a Free state. The list L3 contains references to pages having an obsolete state.

Alternatively, the contactless device SC2 may comprise only one interface: the interface IN2.

The means ME1 may be designed as a single software component or several distinct software components which act as a unique software agent. The means ME1 may be developed in C language for example.

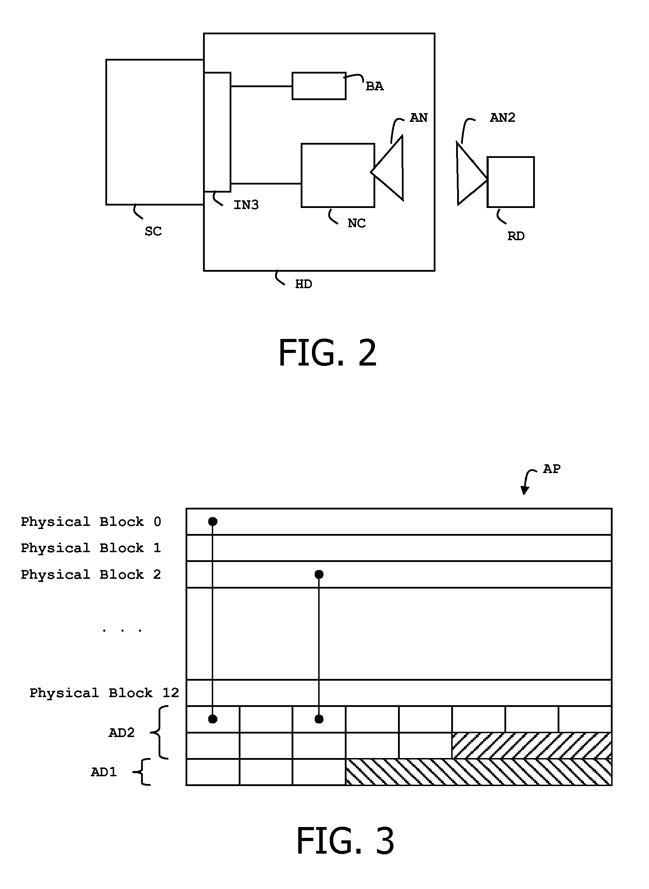

**Figure 2** shows a system comprising a host device HD connected to a portable device SC according to the invention. The device SC is a UICC able to communicate with the host device HM in contact mode. For instance, the device SC may have architecture similar to the device of Figure 1. (With only one contact interface) The host device HD comprises a battery BA and an interface IN3 able to communicate with a connected device SC. The interface IN3 is able to provide the connected device SC with power coming from the battery BA. A contactless reader RD comprises an antenna AN2. The reader RD is able to generate a modulated electromagnetic field and to communicate with the device SC. For instance, the device SC may be a SIM connected to a mobile phone HM.

Alternatively, the device SC may be a contactless card able to communicate with a contactless reader without the host machine HM. For instance, the contactless device SC may comply with ISO14443 standard. In other words, the device SC may either embed its own contactless communication means or use the contactless communication means embedded in a connected host device.

**Figure 3** shows a first example of architecture of one active page AP managed in the portable device SC according to the invention.

In the present example, each memory page of the storage area MA comprises 16 physical blocks (ordered from #0 to #15). Each physical block comprises 16 bytes. One of the memory pages has been allocated to a logical sector and is now an active page AP.

The first 13 physical blocks (Block #0 to block #12) of one active page AP are dedicated to data block virtualization. It is to be noted that several pages may be simultaneously active. Notably the number of active pages may be equal to the number of logical sectors managed by the device SC.

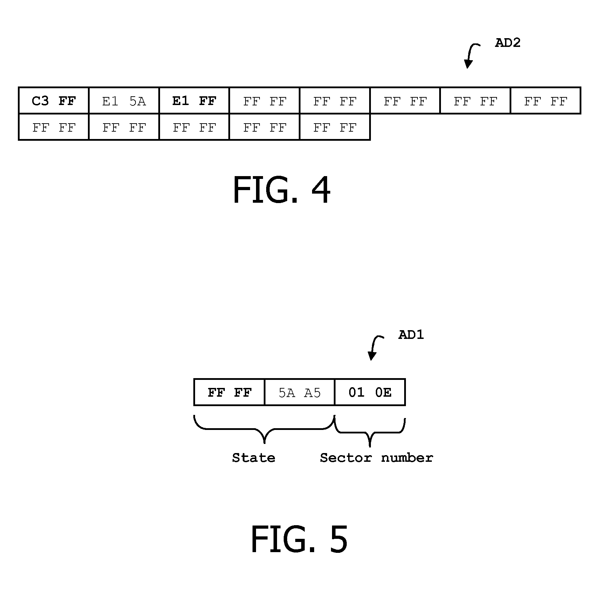

The two next physical blocks (Block #13 and block #14) are dedicated to administration data AD2 related to the data blocks of the page AP. A detailed example of administration data AD2 is provided at Figure 4. The block #13 comprises 8 cells of 2 bytes. The block #14 comprises 5 cells of 2 bytes. The 13 cells of these two blocks is a series of ordered cells. The first cell is implicitly associated to the first physical block (Block #0). The second cell is implicitly associated to the second physical block (Block #1) and so on. The rank of a cell determines the number of the physical block which corresponds to this cell. The last 6 bytes of the block #14 are unused.

The last physical block (Block #15) is dedicated to administration data AD1 related to the logical sector. A detailed example of administration data AD1 is provided at Figure 5.

The block #15 comprises three cells of 2 bytes. The last 10 bytes of the block #15 are unused.

**Figure 4** depicts an example of administration data AD2 related to the data blocks management in a device SC according to the invention.

The value 0xFF is assumed to be the virgin value for the memory MRY.

The first cell contains the value 0xC3FF. The second byte of this cell is kept in a memory virgin state (= 0xFF) meaning that the value of the first byte is relevant and that the physical block associated to this cell may contain an active value. The value of the first byte (= 0xC3) means that the physical block associated to this cell contains the value of data block #03. Since the first cell corresponds to the physical block #0, the physical block #0 contains the value of data block #03.

Advantageously, one nibble (= 0x3) of the first byte contains the number of the associated data block and the other nibble (=0xC) of the same byte contains the same value but one-complemented. Thus the means ME1 is able to check the integrity of the cell when trying to access a data block.

Alternatively, the roles of the two bytes of the cell may be reversed.

The second cell contains the value 0xE15A. The value of the last part (= 0x5A) means that the physical block associated to this cell contains an obsolete value (i.e. an "old" data). The value of the first part (= 0xE1) means that the physical block associated to this cell was allocated to the data block #01.

The third cell contains the value 0xE1FF. The second byte of this cell is kept in a memory virgin state (= 0xFF) meaning that the value of the first byte is relevant and that the physical block associated to this cell may contains an active value. The value of the first byte (= 0xE1) means that the physical block associated to this cell contains the value of data block #01.

The other cells are kept in memory virgin state (0xFFFF). That means these other cells are available for a further allocation to data blocks.

According to the invention, a bit does not need of being written twice. There is only NVM cycle programming when writing a data.

**Figure 5** depicts an example of administration data AD1 related to the sector management in a device SC according to the invention.

The first two cells (i.e. 4 bytes) correspond to the state to the page. The third cell (2 bytes) corresponds to the number of the logical sector allocated to the page. In this example, the page is allocated to the logical sector #01.

When the content of the first cell is not in virgin state the page is obsolete. (i.e. in the present example, the value "0xFFFF" means the page is not obsolete) When the page is not obsolete, the second cell is relevant.

When the second cell keeps a memory virgin state, that means the page is not yet a valid one; the state of this page has been to be turned in Ready-to-use state in setting this cell to a preset value. When the second cell contains a preset value, this means that the third cell is relevant. For example, the preset value may be 0x5AA5. Advantageously, this preset value is selected so as to have one byte comprising the complemented value of the other byte. Advantageously, this preset value is selected so as to have at least one byte whose one nibble contains the complemented value of the other nibble (integrity check purpose).

Alternatively, the roles of the first two cells may be reversed.

When the third cell is relevant, it could reflect a memory virgin state. In that case the page is not an active one and belongs to the L2 list, or it contains a value reflecting the number of the logical sector which is mapped on this page. One byte of this third cell contains the logical sector number (ex: 0x01), the other byte of the same cell contains the same value but 1-complemented (ex: 0x0E).

Thus the means ME1 is able to check the integrity of the cell when trying to access a logical sector.

Alternatively, the roles of these bytes may be reversed.

Suppose now that the active page AP allocated to the logical sector #01 is in the condition described at Figures 3, 4 and 5 when the contactless reader sends a read command targeting the data block #02 of the logical sector #01. The means ME1 detects the no physical block is associated to the targeted data block #02. Consequently, a response is build by the means ME1 by simulating a data block containing a virgin value. If the read command aims at getting the data block #02, the constructed response is a buffer comprising a value which reflects the virgin state of the memory. For instance, the buffer may comprise the value 0xFFFFFFFFFFFFFFFFFFFFFFFFFFFFFFFF. Then the means ME1 sends the response to the reader.

IF the contactless reader sends a further read command targeting the data block #01 of the logical sector #01. The means ME1 detects that the physical block #2 is associated to the targeted data block #01. Consequently, a response is build by the means ME1 by retrieving the content of the physical block #2.

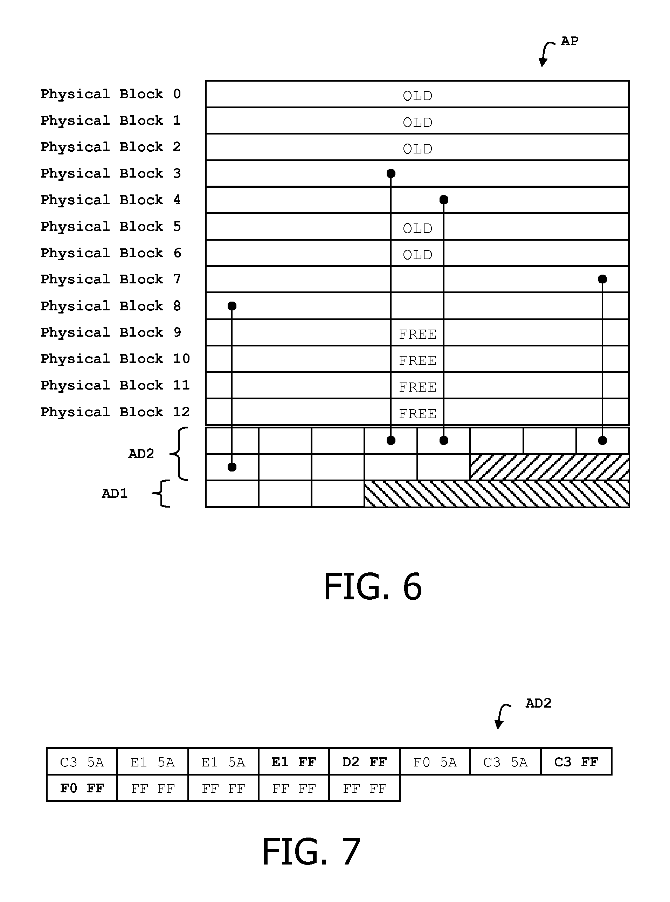

**Figure 6** shows a second example of architecture of an active page AP managed in the portable device SC according to the invention.

Starting from the example of active page described at Figure 3, the following steps are assumed to happen.

At first step, the data block #01 is updated according to a command coming from a contactless reader. Since the third cell contains an active value corresponding to the data block #01, a new physical block is allocated to the data block #01 by using the fourth cell.

Three sub-steps are successively performed:
a) The physical block #03 (which is implicitly associated to the fourth cell) is updated according to the data coming from the reader.
b) Then the block allocation is performed by writing 0XE1 in the first byte of the fourth cell.
c) Then the third cell is update by writing 0x5A in the last byte of the third cell. Thus the third cell and its associated physical block (block #02) become obsolete. The content of the physical block #02 is considered as obsolete (noted "old" at Figure 6)

It is understood that writing operations only need to be performed on memory virgin state location.

Thus each of these writing operations is carried out by a programming cycle only. There is no erase operation when a data block is updated. Consequently, the hardware memory management is fully optimized.

Thanks to the above described design, the means ME1 is able to correctly manage the allocation of physical block to data block even if a power loss occurs between two sub-steps. If a power cut occurs between sub-steps a) and b), the means ME1 is able to retrieve the previous value of data block #01 which is stored into the physical block #02. When a further data block update will occur in the same logical sector, the means ME1 will check the content of the physical block #03 and find a value different from a virgin value. Consequently, the means ME1 will consider the physical block #03 as invalidated and try to allocate the physical block #04.

If a power cut occurs between sub-steps b) and c), the means ME1 will find two physical blocks (#02 and #03) allocated to the same data block (#01). The means ME1 identifies - when L1 list is re-build on power-on - the physical blocks having the lowest number as an obsolete block. Then the means ME1 performs the sub-steps c).

Thus integrity of data managed in the storage area MA is guaranteed when a new physical block allocation occurs.

Advantageously, the means ME1 writes a data together with its complement in AD1 and AD2. Thus when reading a data in AD1 or AD2, the means ME1 may check the value of the complement and identify a possible integrity error.

At second step, the data block #02 is updated according to a further command coming from a contactless reader. Since no there is no cell allocated to the data block #02, (there is no cell containing the value 0xD2FF), a physical block is allocated to the data block #02 for the first time. The physical block #04 is allocated to the data block #02 by using the fifth cell.

Two sub-steps are successively performed:
a) The physical block #04 (which is implicitly associated to the fifth cell) is updated according to the data coming from the reader.
b) Then the block allocation is performed by writing 0XD2 in the fifth cell (first cell contains 0XD2FF).

Advantageously, only the value 0XE1 is physically written since the value 0xFF corresponds to the virgin value of the memory.

At third step, the data block #00 is updated according to another command coming from a contactless reader. The same way as described above, the physical block #05 is updated according to the data coming from the reader the sixth cell is updated with 0XF0 (sixth cell contains then 0XF0FF).

At fourth step, the data block #03 is updated according to new command coming from a contactless reader. At this point, the current value of the data block #03 is stored in the physical block #00. As described at first step, a new physical block (block #06) is allocated to the data block #03 and the seventh cell is updated accordingly with the value 0XC3 (seventh cell contains then 0XC3FF).

At fifth step, the data block #03 is updated according to another command coming from a contactless reader. The same way as described at first step, a new physical block (block #07) is allocated to the data block #03, the eighth cell is updated accordingly with the value 0XC3 (the eighth cell contains then 0XC3FF) and the virgin part of the seventh cell is updated with the value 0X5A (this cell contains then the value 0XC35A).

At sixth step, the data block #00 is updated according to another command coming from a contactless reader. The same way as described at first step, a new physical block (block #08) is allocated to the data block #00, the ninth cell is updated accordingly with the value 0XF0 (the ninth cell contains then 0XF0FF) and the virgin part of the sixth cell is updated with the value 0X5A (this cell contains then the value 0XF05A).

At this point the data AD2 contains the value showed at **Figure 7****.**

The physical blocks #0, #1, #2, #5 and #6 contain obsolete data (showed as "old"). The physical blocks #3, #4, #7 and #8 contain active data corresponding to data block #01, #02, #03 and #00 respectively.

The physical blocks #9 to #12 are not allocated yet and contain virgin data (showed as "free"). They are available for a further allocation.

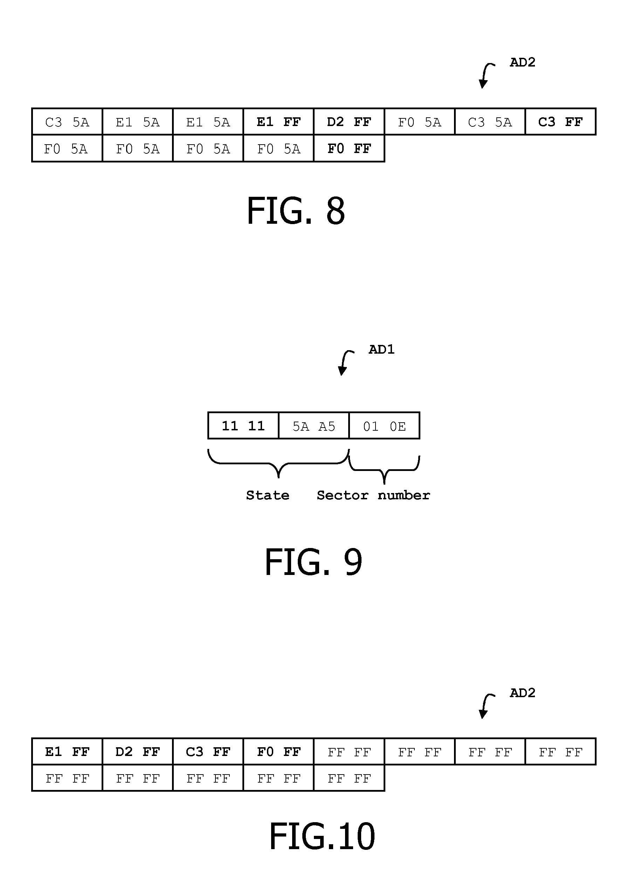

Starting from the example of Figure 7, the data block #00 is updated four more times in accordance with four successive commands from the contactless reader. Consequently, the administration data AD2 is in the state showed at **Figure 8****.** In this case the 13 physical blocks have been used and there is no remaining free physical block in the page AP.

Starting from the example of Figure 8, the data block #00 is updated one more time in accordance with a further command coming from the contactless reader. Consequently, the active page AP becomes an obsolete page and a new page is allocated to the logical sector #01.

The new page allocated to the logical sector #01 is chosen from the pages with a Ready-to-use state. Advantageously, the means ME1 may use the list L2 for identifying a free page to be allocated.

The administration data AD2 of the previous active page AP remains unchanged.

The administration data AD1 of the previous active page AP is updated in order to specify that the page AP is now obsolete. At least one byte of the administration data AD1 is set in the virgin area with a value different of the memory virgin state. For instance, the two first bytes of the administration data AD1 are set to 0X1111 as showed at **Figure 9****.**

The content of the three data blocks #01, #02 and #03 is copied from the previous active page AP to the new active page. The physical blocks #0, #1 and #2 are used for storing the data block content.

The content of the data block #00 is written in the physical blocks #3 by reading the content of the data block #12 of the previous active page AP and applying the update operation according to the received command.

At the end of the update operation, the administration data AD2 of the new active page is as depicted at **Figure 10****.** To achieve this result, the mechanism put in place only used programming operations (no erasing operation) to maximize performance related to access memory. In addition, the described solution helps guard against integrity errors and ensures the robustness of the device SC.

The obsolete page will be erased by the means ME1 at a later time. The means ME1 is able to detect a moment where no critical processing occurs. The means ME1 is able to trigger the erasing of a page having an obsolete state when there is no execution of a critical process. The execution of a process is considered as critical when any extra processing not directly linked to this process, may induce the failure of such a process due to timing constraints for instance. For example the treatment of an authenticate command is a critical treatment.

Advantageously, the means ME1 is able to trigger the erasing of an obsolete page after an authenticate command is completed.

When the battery BA of the host device HM does not provide energy to the device SC (i.e. Battery-Off mode), the erasing operations may be postponed until the device SC is powered by the battery BA again ,or at least up to the time this erasure is not mandatory required.

Advantageously, the means ME1 is able to detect if the device SC get its power from a connected host device. The means ME1 is able to postpone the page erasing if the device SC does not get power from a connected host device.

In a preferred embodiment, the means M1 builds a list L1 in the memory WM either when the device SC is started or when a specific event occurs. For instance, the event may be en error detection. The event may be managed by software means. The list L1 comprises all the pairs sector number / allocated active page number. The means M1 is able to scan the whole storage area MA. The means M1 updates the list L1 each time a new page is allocated to a logical sector.

Advantageously, the means M1 builds a list L2 in the memory WM when needed. The list L2 contains the references to all pages having a Ready-to-use state. For instance, the reference may be the address of the virgin page. The means ME1 may use the list L2 for identifying a free page when a new page is to be allocated to a logical sector.

Advantageously, the means M1 builds a list L3 in the memory WM when needed. The list L3 contains references to pages having an obsolete state. The means ME1 may use the list L3 for identifying an obsolete page when the page erase operation is triggered.

Advantageously the means ME1 may update the three lists L1, L2 and L3 when a new active page is allocated to a logical sector.

Alternatively, the two lists L2 and L3 may be merged in a single list comprising both Ready-to-use pages and obsolete pages. In this case, the means ME1 reads the content stored into a page belonging to this common list in order to distinguish a free page from an obsolete page.

Advantageously, the allocation of new page is performed in 6 sub-steps when the current active page is full.

First, a new page is elected from L2 list for becoming a new active one. Then the content of the existing data blocks is copied from the previously active page to the new elected page at sub-step 2. A physical block is allocated for each data block to be transferred.

Then the administration data AD2 of the new elected page is updated according to the block allocation at sub-step 3.

Then the new elected page is allocated to the logical sector at sub-step 4. The allocation is carried out by writing the sector number in the administration data AD1 of the new page.

Next step - at sub-step 5 - is then to turn the elected page to an active one in setting its state to Active in the administration data AD1 of the page.

Finally, the previous active page is declared as being obsolete at sub-step 6. The old active page is invalidated by writing the Obsolete state in the administration data AD1 of the previous active page.

Thanks to the above described design, the means ME1 is able to correctly manage the storage area MA even if a power loss occurs between two sub-steps. If a power cut occurs between sub-steps 1 and 5, the means ME1 will find only one active page allocated to the logical sector, which is still the old page one (implicit roll-back process). The elected (but not activated) page will be collected as an obsolete page during list reconstruction at power-on. If a power-cut occurs between sub-steps 5 and 6, two active pages (the old one and the elected one) have to be discriminated during List reconstruction process at power-on: the saturated page (the old one) will then be collected as an obsolete one.

The means ME1 is able to write data block by using programming operations only (no erasing: the highest NVM cell update speed is achieved), while ensuring the integrity of stored data and while enabling to distribute the memory wear.

Thus integrity of data managed in the storage area MA is guaranteed when a new page allocation occurs.

Usual backup mechanisms which are deployed in non volatile memories are slow and need at least 10 milliseconds. Thanks to the design described above, the usual backup mechanisms which use erasure functionality are not required.

In the above-described examples, the device SC manages up to 16 logical sectors numbered from #0 to #15, each logical sector comprising four data blocks of 16 bytes.

Alternatively, the device SC may manage both short and long logical sectors: up to 32 short logical sectors numbered from #0 to #31, each short logical sector comprising four data blocks of 16 bytes and up to 8 long logical sectors numbered from #32 to #39, each long logical sector comprising 16 data blocks of 16 bytes. In this case, two actives pages are allocated to a long logical sector. For instance, the first allocated page may contain the 8 even data blocks and the second allocated page may contain the 8 odd data blocks. Thus there is a provision for doing 13 updates in each allocated page before considering a page is saturated. When an allocated page is full, simply reallocate a new page to replace the saturated page (either odd or even). It is not necessary to systematically reallocate two pages to a logical sector when only one page is saturated. In this example, the list L1 contains a three-member association: a long logical sector number associated to an odd page and to an even page.

Alternatively, the device SC may manage any number of logical sectors and data blocks.

According to the invention, logical sectors are virtualized through memory pages and data blocks are virtualized through physical blocks. Each time a data block must be updated, the data block content is programmed at another physical location instead of being updated at the same place. The new physical location is selected in the same page if a virgin physical location is available. Else a new page is remapped to the logical sector and a new physical location of this new page is selected. It should be noted that a physical block is newly allocated only when an update operation is going to be performed for the corresponding data block. Moreover a memory page is never allocated simultaneously to several logical sectors.

An advantage of the invention is to allow wear leveling since each time a data is updated, the data is written in a different physical location.

Non volatile memories like flash memories allow storing very large amounts of data. Unfortunately, the usual access time to these memories is too long compared to the constraints required for some cases of devices working in contactless framework. According to the invention, a non volatile memory may be managed by a software component which allows reaching both high performance for update operations, full data integrity level and high endurance level.

The present examples have been described for a device connected to a NFC host device. The invention may apply to contactless device compliant with Mifare ® requirements. The invention also applies to contactless devices compliant with any contactless protocols.

## Claims

1. A **secure device** (SC) comprising a non volatile memory (MRY) and a means (ME1) able to provide a secure storage to a contactless reader, said means (ME1) being able to manage logical sectors comprising a preset number of 16-byte data blocks, and to provide a secured access to said data blocks,
**characterized in that** said means (ME1) is a software agent, **in that** said device (SC) comprises a microprocessor (MP) able to run said means (ME1), **in that** said means (ME1) is adapted to ensure consistency and integrity of the data blocks and **in that** said means (ME1) is adapted to ensure storing and managing of said data blocks without erasing operations.

2. A secure device (SC) according to claim 2, wherein said means (ME1) being adapted to update a data block at the maximum speed allowed by the physical capabilities of the memory (MRY).

3. A secure device (SC) according to any one of claims 1 to 2,, wherein the memory (MRY) contains a plurality of physical pages (P1, P2, P3), wherein each page contains a series of physical blocks and a series of cells, each of said physical blocks being individually associated to a cell according to the cell rank, wherein an active page (AP) is allocated to a targeted logical sector and wherein said means (ME1) is adapted:
- to allocate a physical block to a data block each time the data block is accessed for an update operation, the physical block being allocated only if said physical block is in memory virgin state and its associated cell contains a preset value,
- when reading a targeted data block, to identify the physical block allocated to the targeted data block by using the rank of the cell associated to the physical block, and if no physical block is allocated to the targeted data block, to simulate a virgin data block,
- to allocate a new active page to the targeted logical sector each time a data block belonging to the targeted logical sector is accessed for an update operation and the active page (AP) contains no free physical block, said active page (AP) becoming an obsolete page (OP).

4. A secure device (SC) according to claim 3, wherein each page is managed according a current state among the three states: Active, Read-to-use, or Obsolete, the Active state corresponding to an active page, the Obsolete state corresponding to page to erase, and the Ready-to-use state corresponding to a page ready to be allocated and wherein the means (ME1) is adapted to read the current state of a page at a preset position in the page itself.

5. A secure device (SC) according to claim 4, wherein the means (ME1) manages the targeted logical sector thanks to first administration data (AD1) and manages the data blocks of the targeted logical sector thanks to second administration data (AD2), wherein said first and second administration data (AD1, AD2) are recorded in the active page (AP) allocated to the targeted logical sector and wherein said first administration data (AD1) comprises the current state of said active page (AP).

6. A secure device (SC) according to claim 5, wherein said second administration data (AD2) is stored in a subset of the series of cells of the active page (AP), each of said cells having a byte containing the data block number and another byte representing the state of said data block.

7. A secure device (SC) according to any one of claims 2 to 6, wherein said means (ME1) updates the data blocks and the second administration data (AD2) via non volatile memory programming cycles only.

8. A secure device (SC) according to any one of claims 2 to 7, wherein the device (SC) comprises a working memory (WM) and wherein said means (ME1) is adapted to generate a first list (L1) in the working memory (WM), said first list (L1) containing mapping data reflecting the link between the targeted logical sector and the active page (AP) allocated to the targeted logical sector.

9. A secure device (SC) according to claim 8, wherein said means (ME1) is adapted to generate a second list (L2) in the working memory (WM), said second list (L2) containing references to pages having a Ready-to-use state.

10. A device (SC) according to claim 8, wherein the means (ME1) is able to generate a third list (L3) in the working memory (WM), said third list (L3) containing references to pages having an Obsolete state.

11. A secure device (SC) according to any one of claims 2 to 10, wherein said means (ME1) is adapted to trigger the erasing of a page having an Obsolete state when there is no execution of a critical processing, a processing being critical if the duration of execution of the processing must be lower than a preset threshold.

12. A secure device (SC) according to claim 11, wherein the process of granting logical sector access is critical processing.

13. A secure device (SC) according to claim 11, wherein the secure device (SC) is intended to connect a host device (HD) able to provide the device (SC) with power and wherein said means (ME1) is adapted to trigger said erasing only if the host device (HD) provides power to the device (SC).

14. A secure device (SC) according to any one of claims 11 to 13, wherein only pages having an obsolete state may be erased.
